# EUROPÄISCHE PATENTANMELDUNG

(11) **EP 3 336 508 A1**
(43) Veröffentlichungstag der Anmeldung: **20.06.2018**
(21) Anmeldenummer: 17001886.5
(22) Anmeldetag: 17.11.2017
(51) Int. Cl.: G01M 3/18, G01F 15/06

(54) **ZÄHLEREINRICHTUNG, ZÄHLERSYSTEM UND VERFAHREN ZUM BETRIEB EINER ZÄHLEREINRICHTUNG**

(30) Priorität: 13.12.2016 DE 102016014815
(71) Anmelder: Diehl Metering GmbH, 91522 Ansbach (DE)
(72) Erfinder: VOM SCHLOSS, Edgar, 90574 Roßtal (DE); SPYRKA, Piotr, 43-445 Dziegielów (PL)
(74) Vertreter: Diehl Patentabteilung

(57) **Zusammenfassung**

Zählereinrichtung (2) für eine eine durch ein Fluid transportierte Wärmenergie und/oder einen Fluiddurchfluss angebende Messgröße zum Anschluss an eine das Fluid führende Rohrleitung (3), wobei die Zählereinrichtung (2) eine Messeinrichtung (11) zur Messung der Messgröße aufweist, wobei die Zählereinrichtung (2) ferner eine Leckagedetektionseinrichtung (12) für die Rohrleitung (3) aufweist, welche umfasst:
- ein Anschlussmittel (15) zum Anschluss an eine seitens der Rohrleitung (3) vorgesehene elektrisch leitende Leckagedetektionskomponente,
- ein wenigstens einen elektrischen Kennwert der Leckagedetektionskomponente messendes Messmittel (14), und
- eine Steuereinrichtung (13), die zur Detektion eines Lecks durch Auswertung der Messdaten des Messmittels (14) und zur Durchführung wenigstens einer Maßnahme bei Detektion eines Lecks ausgebildet ist.

## Beschreibung

Die Erfindung betrifft eine Zählereinrichtung für eine eine durch ein Fluid transportierte Wärmeenergie und/oder einen Fluiddurchfluss angebende Messgröße zum Anschluss an eine das Fluid führende Rohrleitung, wobei die Zählereinrichtung eine Messeinrichtung zur Messung der Messgröße aufweist. Daneben betrifft die Erfindung ein Zählersystem und ein Verfahren zum Betrieb einer solchen Zählereinrichtung.

Zählereinrichtungen für Wärmeenergie, sogenannte Wärmezähler, und/oder für einen Fluiddurchfluss, insbesondere Durchflusszähler bzw. Wasserzähler, sind im Stand der Technik bereits weitgehend bekannt. Sie werden meist seitens des Endverbrauchers an eine Rohrleitung, über die das Fluid vom Versorger geliefert wird, angeschlossen, um den Verbrauch der jeweiligen Ressource nachvollziehen zu können. Für den Transport von Wärmeenergie wird üblicherweise Wasser verwendet, wobei selbstverständlich auch kaltes Wasser zu Kühlzwecken betrachtet werden kann. Während es früher üblich war, dass derartige Zählereinrichtungen eine Anzeige für den gemessenen Verbrauch, mithin die Messgröße, aufweisen, können moderne Geräte auch mit Kommunikationspartnern, beispielsweise einem Server und/oder einem endverbraucherseitigen Rechner, direkt oder indirekt kommunizieren, insbesondere, um den gemessenen Verbrauch automatisch zur Verrechnung übermitteln zu können. Hierzu weisen moderne Zählereinrichtungen üblicherweise Kommunikationseinrichtungen zur drahtlosen und/oder drahtgebundenen Kommunikation mit wenigstens einem Kommunikationspartner auf.

Probleme können dann auftreten, wenn entlang der Rohrleitung ein Leck auftritt. Ein derartiges Leck kann nicht nur dazu führen, dass die Werte für den Verbrauch durch die Endverbraucher und den Ausfluss seitens des Versorgers unterschiedlich sind, sondern auch zu nachhaltigeren Beschädigungen der Rohrleitung. So weisen bekannte Rohrleitungen häufig ein Innenrohr auf, welches von einem Isolationsmaterial umgeben ist, welches wiederum durch ein Außenrohr von der Umgebung abgetrennt wird. Dabei ist es beispielsweise ungewollt, wenn durch ein Leck des Innenrohrs Fluid, insbesondere Wasser, in das Isolationsmaterial, beispielsweise PUR, eintritt.

Mithin wurden im Stand der Technik bereits Verfahren vorgeschlagen, um Lecks entlang von Rohrleitungen zu erkennen und insbesondere auch zu lokalisieren. So offenbart DT 23 37 983 A1 eine Schaltungsanordnung zur Feststellung, Ortung und gegebenenfalls Anzeige von Leckstellen in Rohrleitungsstrecken, wobei eine Meldeader aus Widerstandsdraht entlang der Rohrleitung geführt wird, so dass sich entlang ihrer Länge ein Spannungsabfall ausbilden kann, wenn ein Strom durch die Meldeader geleitet wird. Entsteht nun ein Leck und schließt die Meldeader mit dem üblicherweise geerdeten Innenrohr kurz, kann dieser Effekt mittels eines Spannungsmessers vermessen werden. Insbesondere enthält die gemessene Spannung eine Aussage darüber, wo sich in etwa das Leck befindet.

DE 41 24 640 A1 betrifft ein Rohrleitungssystem, bei welchem wenigstens drei zusätzliche Leiter entlang des Innenrohrs geführt werden, um eine Messung mit zwei Messverfahren zu erlauben, nämlich zum einen mit einer Widerstandsmessung und zum anderen mit einer Laufzeitmessung. Gemäß DE 10 2010 026 795 A1 soll aufgrund einer zusätzlichen Berücksichtigung des zeitlichen Verlaufs der Menge des Niederschlags zwischen Lecks im Außenrohr und im Innenrohr unterschieden werden.

Zur Realisierung einer derartigen Leckageerkennung ist es notwendig, zusätzlich zu der Zählereinrichtung weitere Hardware an der Rohrleitung, isnbesondere beim Endverbraucher, zu realisieren, beispielsweise die Schaltungsanordnung der DT 23 37 983 A1 zu verbauen. Dies ist aufwendig, verursacht zusätzliche Kosten und kann aufgrund der Inkompatibilität der Einrichtungen zu Problemen führen.

Der Erfindung liegt daher die Aufgabe zugrunde, eine demgegenüber verbesserte Möglichkeit zur Detektion eines Lecks und insbesondere auch zur Reaktion auf eine derartige Detektion eines Lecks anzugeben.

Zur Lösung dieser Aufgabe ist erfindungsgemäße eine Zählereinrichtung für eine eine durch das Fluid transportierte Wärmeenergie und/oder einen Fluiddurchfluss angebende Messgröße zum Anschluss an eine das Fluid führende Rohrleitung vorgesehen, wobei die Zählereinrichtung eine Messeinrichtung zur Messung der Messgröße aufweist, welche sich dadurch auszeichnet, dass die Zählereinrichtung ferner eine Leckagedetektionseinrichtung für die Rohrleitung aufweist, welche umfasst:
- ein Anschlussmittel zum Anschluss an eine seitens der Rohrleitung vorgesehene elektrisch leitende Leckagedetektionskomponente,
- ein wenigstens einen elektrischen Kennwert der Leckagedetektionskomponente messendes Messmittel, und
- eine Steuereinrichtung, die zur Detektion eines Lecks durch Auswertung der Messdaten des Messmittels und zur Durchführung wenigstens einer Maßnahme bei Detektion eines Lecks ausgebildet ist.

Es wird mithin vorgeschlagen, eine Leckagedetektionseinrichtung in die Zählereinrichtung vollständig zu integrieren, wobei mit besonderem Vorteil die Steuereinrichtung der Leckagedetektionseinrichtung der Steuereinrichtung für die Zählereinerichtung insgesamt entsprechen kann. Ist die Zählereinrichtung selbst zur Detektion eines Lecks ausgebildet, ist es nicht länger nötig, mehrere Vorrichtungen endverbraucherseitig an die Rohrleitung anzuschließen. Insbesondere ergeben sich im Folgenden noch genauer diskutierte Möglichkeiten, die Funktionalitäten der Verbrauchsmessungen und der Leckdetektion miteinander zu verknüpfen und insbesondere auch gemeinsam genutzte Komponenten vorzusehen, beispielsweise eine Kommunikationseinrichtung und/oder Recheneinrichtungen der Steuereinrichtung. Es wird ausgenutzt, dass die Rohrleitungen üblicherweise bereits die entsprechenden Leckagedetektionskomponenten aufweisen, so dass lediglich noch ein Anschluss des Messmittels an die entsprechenden Leckagedetektionskomponenten, beispielsweise umfassend einen außerhalb eines Innenrohrs verlaufenden Draht, zu ermöglichen, was erfindungsgemäß über ein Anschlussmittel (Schnittstellenmittel) geschieht. Dabei sei noch darauf hingewiesen, dass die Zählereinrichtung nicht zwangsläufig seitens eines Endverbrauchers installiert sein muss, sondern es durchaus auch denkbar ist, an Verteilstellen bzw. angrenzend an einzelne Leitungsabschnitte der Rohrleitungen versorgerseitig Zählereinrichtungen vorzusehen, in die bereits eine Leckageerkennung integriert ist, um auf diese Art und Weise die Zahl der benötigten Komponenten zu reduzieren und gezielt Lecks in bestimmten Leitungsabschnitten detektieren zu können. Insgesamt und allgemein vereint die erfindungsgemäße Zählereinrichtung, die insbesondere als ein Wärmezähler oder ein Wasserzähler ausgebildet ist, die Funktionen der Verbrauchsmessung und der Leckdetektion.

Dabei können letztlich alle grundsätzlich bekannten Arten zur Leckagedetektion anhand einer elektrischen Schaltung auch im Rahmen der vorliegenden Erfindung eingesetzt werden, wobei es sich als besonders vorteilhaft erwiesen hat, wenn das Messmittel als elektrischen Kennwert den Widerstand wenigstens einer der wenigstens einen Leckagedetektionskomponente und/oder eine an wenigstens einer der wenigstens einen Leckagedetektionskomponente anfallende Spannung misst. Dabei kann auch eine Spannungsmessung und/oder Widerstandsmessung über aus mehrere Leckagedetektionskomponenten (und gegebenenfalls das Fluid) gebildete Leiterabschnitte erfolgen. Insbesondere bezüglich des Widerstands und/oder der Spannung als gemessener elektrischer Kennwert ergibt sich der Vorteil, dass ein Normalwert definiert werden kann, wobei bei einer zu starken Abweichung von einem derartigen Normalwert ein Leck detektiert werden kann.

So kann vorgesehen sein, dass die Steuereinrichtung zur Detektion eines Lecks bei einer einen Schwellwert überschreitenden Abweichung des elektrischen Kennwerts von einem Normalwert ausgebildet ist. Weicht der gemessene elektrische Kennwert beispielsweise um mehr als 5 %, 10 % oder 15 % von dem Normalwert ab, kann die Detektion eines Lecks erfolgen, beispielsweise bei einer Widerstandsmessung. Ist es mit dem verwendeten Leckagedetektionsverfahren auch möglich, Informationen über den Ort des Lecks zu erhalten, ist die Steuereinrichtung zweckmäßigerweise zur Ermittlung einer Ortsinformation des Lecks in Abhängigkeit des gemessenen elektrischen Kennwerts ausgebildet, so dass auch diese Funktionalität innerhalb der Zählereinrichtung realisiert werden kann.

In einer konkreten Ausgestaltung kann beispielsweise vorgesehen sein, dass bei einer als außerhalb eines das elektrisch leitende Fluid führenden Innenrohrs der Rohrleitung angeordneter Draht ausgebildeten Leckagedetektionskomponente das geerdete Innenrohr als weitere Leckagedetektionskomponente verwendet wird, wobei das Messmittel einen Widerstand eines durch den Draht und die Innenleitung gebildeten Leiterabschnitts und/oder eine über dem Leiterabschnitt abfallende Spannung misst. Die Rohrleitung kann dabei das Innenrohr umfassen, die umgebend ein Isolationsmaterial, beispielsweise PUR, angeordnet ist. Nach außen abgeschlossen wird die Rohrleitung durch ein Außenrohr, welches beispielsweise aus Kunststoff bestehen kann. Tritt nun ein Leck am Innenrohr auf, gelangt elektrisch leitfähiges Fluid, insbesondere Wasser, in den Isolationsbereich und verbindet so das geerdete Innenrohr elektrisch leitend mit dem Draht, so dass mithin beispielsweise nicht mehr der Widerstand über die gesamte Länge des Drahts vermessen wird, sondern nur ein Teil hiervon. Insbesondere kann der tatsächliche Widerstandswert auch eine Information über den Ort des Lecks enthalten. Selbstverständlich können auch mehrere solche Drähte, insbesondere Widerstandsdrähte, verwendet werden und/oder andere Vorgehensweisen eingesetzt werden, beispielsweise eine Laufzeitmessung eines ausgesendeten Signals, welches an der Leckstelle reflektiert würde, wozu üblicherweise zwei Drähte als Leckagedetektionskomponenten verwendet werden.

In einer besonders vorteilhaften Weiterbildung der vorliegenden Erfindung ist vorgesehen, dass die Steuereinrichtung als Maßnahme zur Berücksichtigung der Detektion eines Lecks bei der Messgrößenaufnahme oder Messgrößenspeicherung ausgebildet ist. In diesem Fall werden mithin Synergieeffekte genutzt, um die Messgrößenerfassung betreffende Maßnahmen vorzunehmen, das bedeutet insbesondere, aus den Messgrößen erkenntlich zu machen, welcher Verbrauch bei Detektion eines Lecks aufgetreten ist bzw. vermessen wurde. Konkret kann beispielsweise vorgesehen sein, dass die Steuereinrichtung zum Abspeichern von Zeiträumen, in denen ein Leck detektiert wurde, mit der aufgenommenen Messgröße und/oder zum Ermitteln eigener Messgrößen für Zeiträume, in denen ein Leck detektiert wurde, ausgebildet ist. Wird beispielsweise ein Messgrößenverlauf, also ein Verlauf des Verbrauchs, abgespeichert, und ist gleichzeitig bekannt, in welchen Zeiträumen ein Leck vorlag, kann dies bei der Auswertung des Verbrauchs entsprechend berücksichtigt werden, insbesondere, wenn ein nach der Zählereinrichtung angeordnetes Leck detektiert wird. Denkbar ist es ferner, während eines Lecks auftretende Verbräuche als getrennte Messgröße, insbesondere also Verbrauchsmenge, abzuspeichern, beispielsweise in einem eigenen Register. Auch hier lässt sich der Zusammenhang zwischen der Messgröße und dem Leck bei der späteren Auswertung derart nachvollziehen.

Bevorzugt ist es im Rahmen der vorliegenden Erfindung ferner, wenn die Zählereinrichtung eine Kommunikationseinrichtung zur drahtlosen und/oder drahtgebundenen Kommunikation mit wenigstens einem Kommunikationspartner aufweist, dass die Steuereinrichtung als Maßnahme zur Ansteuerung der Kommunikationseinrichtung zur Ausgabe eines ein Leck anzeigenden Kommunikationssignals ausgebildet ist. Letztendlich kann auch in dieser Art und Weise eine Art von "Leckalarm" realisiert werden, indem insbesondere relevante Personenkreise informiert werden und/oder automatisiert Maßnahmen bei Kommunikationspartnern eingeleitet werden. So kann beispielsweise vorgesehen sein, dass die Steuereinrichtung zur Ausgabe eines ein Schließen eines in der Rohrleitung angeordneten Ventils auslösenden Steuersignals als Kommunikationssignal an das Ventil ausgebildet ist. Ist mithin in der Rohrleitung, insbesondere dem Leck vorgeordnet, ein Ventil vorhanden, das ebenso über eine Kommunikationseinrichtung verfügt und mithin als Kommunikationspartner zur drahtgebundenen und/oder drahtlosen Kommunikation mit der Zählereinrichtung dienen kann, kann es zweckmäßig sein, bei Detektion eines Lecks die Fluidzufuhr in die Rohrleitung abzubrechen, indem über die zählereinrichtungsseitige Kommunikationseinrichtung ein entsprechendes Kommunikationssignal, konkret ein Steuersignal, an das Ventil gesendet wird. Auf diese Weise kann automatisiert vermieden werden, dass weiteres Fluid durch das Leck austritt.

Ferner kann vorgesehen sein, dass die Steuereinrichtung zum Senden des Kommunikationssignals an wenigstens eine einem Endverbraucher und/oder einem Versorger und/oder einem Notfalldienst zugeordnete Empfangseinrichtung ausgebildet ist. Ist die Zählereinrichtung bei einem Endverbraucher installiert, kann beispielsweise der Kommunikationspartner eine Alarmeinrichtung und/oder eine Recheneinrichtung und/oder ein Mobilgerät eines Endverbrauchers sein, um diesen möglichst schnell über das Leck informieren zu können, so dass er beispielsweise auch manuell ein entsprechendes Ventil abschalten kann. Zweckmäßig kann es auch sein, andere Stellen zu informieren, beispielsweise den Versorger, ein Serviceunternehmen und/oder einen Notfalldienst, beispielsweise die Feuerwehr und/oder das technische Hilfswerk, die ebenso bei der Beseitigung des Lecks und gegebenenfalls existierender Folgen hilfreich sein können. Dabei sei noch darauf hingewiesen, dass verschiedene Arten von Kommunikationsverbindungen zu dem jeweiligen Kommunikationspartner möglich sind, beispielsweise einfache drahtgebundene Kommunikationsverbindungen, bevorzugt jedoch drahtlose Kommunikationsverbindungen wie WLAN-Verbindungen und/oder Mobilfunkverbindungen und/oder sonstige Funkverbindungen.

Die Steuereinrichtung kann vorzugsweise ferner dazu ausgebildet sein, den elektrischen Kennwert zyklisch zu vermessen, beispielsweise jede Stunde und/oder jeden Tag. Auch kürzere Zeitabstände sind selbstverständlich denkbar.

Neben der Zählereinrichtung betrifft die Erfindung auch ein Zählersystem, umfassend eine Zählereinrichtung der erfindungsgemäßen Art und die Rohrleitung mit der wenigstens einen Leckagedetektionskomponene. Sämtliche Ausführungen bezüglich der Zählereinrichtung gelten analog für das erfindungsgemäße Zählersystem, so dass auch mit diesem die bereits genannten Vorteile erhalten werden können.

Schließlich betrifft die Erfindung auch ein Verfahren zum Betrieb einer Zählereinrichtung, insbesondere einer erfindungsgemäßen Zählereinrichtung, für eine eine durch ein Fluid transportierte Wärmeenergie und/oder einen Fluiddurchfluss angebenden Messgröße zum Anschluss an eine das Fluid führende Rohrleitung, wobei die Rohrleitung wenigstens eine elektrisch leitende Leckagedetektionskomponente aufweist, wobei
- wenigstens ein elektrischer Kennwert der Leckagedetektionskomponente gemessen wird,
- durch Auswertung des gemessenen elektrischen Kennwerts ein Leck in der Rohrleitung detektiert wird, und
- bei Detektion eines Lecks wenigstens eine die Messgrößenerfassung und/oder die Kommunikation des Lecks an einen Kommunikationspartner betreffende Maßnahme ausgelöst wird.

Auch bezüglich des erfindungsgemäßen Verfahrens lassen sich die Ausführungen zur Zählereinrichtung sinngemäß übertragen, so dass die erhaltenen Vorteile fortgelten.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: ein erfindungsgemäßes Zählersystem,
- Fig. 2: einen Querschnitt durch die Rohrleitungen des Zählersystems gemäß Fig. 1, und
- Fig. 3: eine Prinzipskizze der Zählereinrichtung des Systems gemäß Fig. 1.

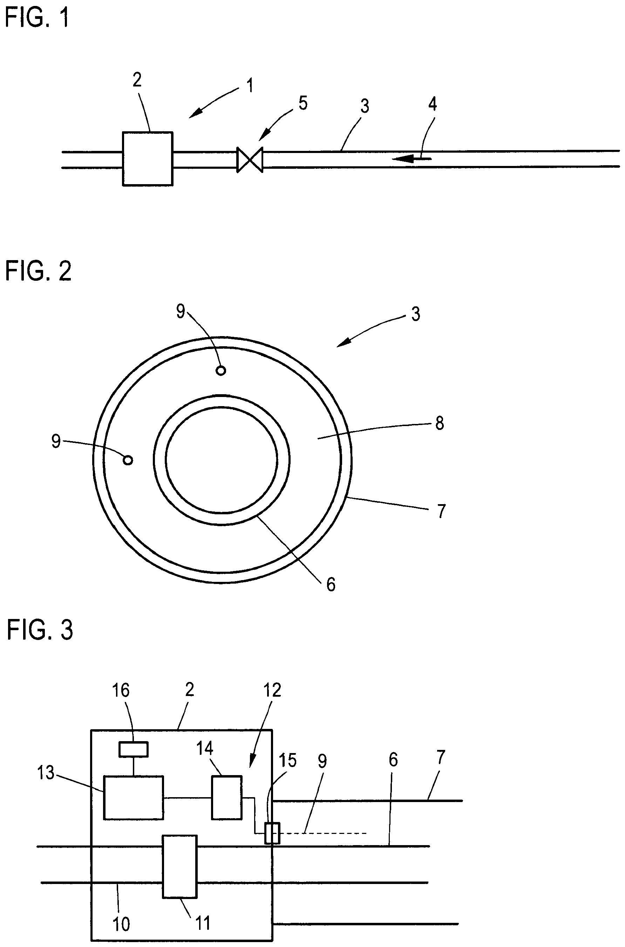

Fig. 1 zeigt eine Prinzipskizze eines Ausführungsbeispiels eines erfindungsgemäßen Zählersystems 1. Das Zählersystem 1 umfasst eine Zählereinrichtung 2, bei der es sich beispielsweise um einen Wärmezähler für durch Wasser transportierte Wärme oder einen Durchflussmesser für Wasser handeln kann. Die Zählereinrichtung 2 ist mithin an einer Rohrleitung 3 angeordnet, durch die das Wasser gemäß dem Pfeil 4 von einem Versorger erhalten wird. Dabei kann die Zählereinrichtung 2 beispielsweise endverbraucherseitig angeordnet sein, wobei die Rohrleitung 3 beispielsweise von einer Hauptleitung zu einem Gebäude des Endverbrauchers abzweigt. Innerhalb der Rohrleitung 3 kann wenigstens ein Ventil 5 vorgesehen sein, welches vorliegend drahtlos ansteuerbar ausgestaltet ist und im geschlossenen Zustand den weiteren Zustrom von Wasser zu dem Endverbraucher unterbindet.

Fig. 2 zeigt die Rohrleitung 3 in einem Querschnitt. Sie umfasst ein metallisches, geerdetes Innenrohr 6, durch das das Wasser gefördert wird. Durch ein konzentrisch zu dem Innenrohr 6 vorgesehenes Außenrohr 7 ist ein Zwischenraum definiert, der durch ein isolierendes Material 8, vorliegend PUR, aufgefüllt ist. Innerhalb des isolierenden Materials 8 sind parallel zu dem Innenrohr 6 als Leckagedetektionskomponenten zwei Drähte 9 geführt, die insbesondere als Widerstandsdrähte ausgebildet sind. Die Drähte 9 können genutzt werden, um mittels eines geeigneten Messmittels, insbesondere einer Messschaltung, einen elektrischen Kennwert zu ermitteln, der sich bei Anwesenheit eines Lecks des Innenrohrs 6 und somit dem Eindringen von Wasser in den Zwischenraum zwischen dem Innenrohr 6 und dem Außenrohr 7 verändert. Nachdem das durch die Rohrleitung 3 transportierte Wasser elektrisch leitfähig ist, wird bei einem Leck eine elektrisch leitende Verbindung zwischen den Drähten 9 und dem geerdeten, selbst metallisch leitenden und gegebenenfalls als Leckagedetektionskomponente wirkenden Innenrohr geschaffen.

Sind die Drähte 9 als Widerstandsdrähte ausgebildet, die beispielsweise an dem der Zählereinrichtung 2 abgewandten Ende der Rohrleitung 3 mit dem Innenrohr 6 verbunden sind, ergibt sich bei eingelegter Spannung ein Spannungsabfall entlang dem als Widerstandsdraht ausgebildeten Draht 9, so dass bei einem Leck durch Messung der Spannung (oder auch des verbleibenden Widerstandes) nicht nur festgestellt werden kann, nämlich aufgrund der Abweichungen von einem Normalwert, dass ein Leck vorliegt, sondern auch eine Aussage über die Position des Lecks, also eine Ortsinformation, abgeleitet werden kann. Selbstverständlich sind auch andere Messmethoden unter Verwendung geeigneter Leckagedetektionskomponenten denkbar, beispielsweise die Vermessung der Reflektion eines ausgesandten Signals und dergleichen.

Im Zählersystem 1 ist nun vorgesehen, dass die Messung des elektrischen Kennwerts und die Auswertung des elektrischen Kennwerts zur Detektion eines Lecks innerhalb der in Fig. 3 schematisch näher gezeigten Zählereinrichtung 2 erfolgt.

Die Zählereinrichtung 2 umfasst zunächst, wie grundsätzlich bekannt, eine vorliegend in eine Fortsetzung 10 des Innenrohrs 9 geschaltet gezeigte Messeinrichtung 11 für die eigentliche Messgröße, insbesondere also die durchgeleitete Wärme und/oder die Durchflussmenge. Die Zählereinrichtung 2 umfasst nun aber zusätzlich eine Leckagedetektionseinrichtung 12, die eine auch als generelle Steuereinrichtung für die Zählereinrichtung 2 dienende Steuereinrichtung 13, ein Messmittel 14 und ein Schnittstellenmittel als Anschlussmittel 15 umfasst. Über das Anschlussmittel 15 werden elektrisch leitende Verbindungen zu den Drähten 9 und dem geerdeten Innenrohr 6 hergestellt. Dies ermöglich es dem insbesondere eine Messschaltung umfassenden Messmittel 14, den elektrischen Kennwert der entsprechenden Unterkombination von Leckagedetektionskomponenten zu messen, vorliegend den Widerstand, der sich entlang eines als Widerstandsdraht ausgebildeten Drahtes 9 und zurück entlang dem Innenrohr 6 ergibt. Je nach der effektiven Länge des Drahtes 9 werden unterschiedliche Widerstände gemessen, wobei der Draht 9 durch Herstellung einer leitenden Verbindung bei einem Leck des Innenrohrs 6 in seiner vermessenen Länge gekürzt wird. Es existiert mithin ein Normalwert für den Widerstand ohne Leck, der in der Steuereinrichtung 13 bekannt ist. Liefert mithin das Messmittel 14, welches neben einer Messschaltung auch einen Widerstandsmesser und/oder einen Spannungsmesser und/oder einen Strommesser aufweisen kann, einen gemessenen Widerstand als gemessenen elektrischen Kennwert, der von dem Normalwert um mehr als einen Schwellwert abweicht, wird ein Leck detektiert. Die Steuereinrichtung 13 wertet also die Messdaten des Messmittels 14 aus, indem eine Abweichung des gemessenen Widerstands von dem Normalwert festgestellt und mit einem Schwellwert verglichen wird, bei dessen Überschreitung ein Leck anzunehmen ist. Die Steuereinrichtung 13 ist vorliegend ferner dazu ausgebildet, auch eine Ortsinformation des Lecks in Abhängigkeit des gemessenen Widerstands zu ermitteln.

Dabei sei an dieser Stelle noch angemerkt, dass neben dem Widerstand als elektrischer Kennwert auch andere elektrische Kennwerte betrachtet werden können, beispielsweise eine Spannung oder auch eine Laufzeit eines ausgesandten und reflektierten Signals entlang zweier Drähte 9.

Wird in der Steuereinrichtung 13 ein Leck festgestellt, werden verschiedene Maßnahmen ergriffen. So ist zunächst vorgesehen, dass Zeiträume, in denen ein Leck vorliegt, gemeinsam mit den Messgrößen der Messeinrichtung 11 gespeichert werden. Um eine noch genauere Unterscheidung für eine spätere Auswertung treffen zu können, werden während eines Lecks aufgenommene Messgrößen getrennt gespeichert, beispielsweise durch Nutzung eines eigenen Registers.

Als weitere Maßnahme steuert die Steuereinrichtung 13 auch eine Kommunikationseinrichtung 16 der Zählereinrichtung 2 an, die vorliegend zur drahtlosen Kommunikation mit wenigstens einem Kommunikationspartner ausgebildet ist. So wird als Kommunikationssignal, das das Vorliegen des Lecks beschreibt, zunächst ein Steuersignal an das Ventil 5 als Kommunikationspartner gesendet, welches bei dessen Empfang sperrt und somit gegebenenfalls verhindern kann, dass weiteres Wasser aus dem Leck austritt. Kommunikationssignale werden jedoch auch an eine Servereinrichtung, beispielsweise einen Backend-Rechner, des Versorgers geschickt, so dass auch dieser über das Vorliegen des Lecks informiert ist. Andere weitere Kommunikationspartner sind insbesondere dem Endverbraucher und/oder Notfalldiensten zugeordnete Geräte, so dass beispielsweise eine Kurznachricht an ein Mobiltelefon des Endverbrauchers geschickt werden kann und/oder die Feuerwehr und/oder das technische Hilfswerk informiert werden können, insbesondere im Fall ungünstig gelegener Lecks. So ist auch eine Art Leckagealarm realisiert.

Selbstverständlich lassen sich die Ausführungen bezüglich dieses Ausführungsbeispiels auch auf andere Fluide neben dem hier beispielhaft genannten Wasser anwenden.

## Patentansprüche

1. Zählereinrichtung (2) für eine eine durch ein Fluid transportierte Wärmenergie und/oder einen Fluiddurchfluss angebende Messgröße zum Anschluss an eine das Fluid führende Rohrleitung (3), wobei die Zählereinrichtung (2) eine Messeinrichtung (11) zur Messung der Messgröße aufweist, **dadurch gekennzeichnet, dass** die Zählereinrichtung (2) ferner eine Leckagedetektionseinrichtung (12) für die Rohrleitung (3) aufweist, welche umfasst:
- ein Anschlussmittel (15) zum Anschluss an eine seitens der Rohrleitung (3) vorgesehene elektrisch leitende Leckagedetektionskomponente,
- ein wenigstens einen elektrischen Kennwert der Leckagedetektionskomponente messendes Messmittel (14), und
- eine Steuereinrichtung (13), die zur Detektion eines Lecks durch Auswertung der Messdaten des Messmittels (14) und zur Durchführung wenigstens einer Maßnahme bei Detektion eines Lecks ausgebildet ist.

2. Zählereinrichtung (2) nach Anspruch 1, **dadurch gekennzeichnet, dass** das Messmittel (14) den Widerstand der Leckagedetektionskomponente und/oder eine an der Leckagedetektionskomponente anfallende Spannung misst.

3. Zählereinrichtung (2) nach Anspruch 1 oder 2, **dadurch gekennzeichnet, dass** die Steuereinrichtung (13) zur Detektion eines Lecks bei einer einen Schwellwert überschreitenden Abweichung des elektrischen Kennwerts von einem Normalwert und/oder zur Ermittlung einer Ortsinformation des Lecks in Abhängigkeit des gemessenen elektrischen Kennwerts ausgebildet ist.

4. Zählereinrichtung (2) nach einem der vorangehenden Ansprüche, **dadurch gekennzeichnet, dass** bei einer als außerhalb eines das elektrisch leitende Fluid führenden Innenrohrs (6) der Rohrleitung (3) angeordneter Draht (9) ausgebildeten Leckagedetektionskomponente das geerdete Innenrohr (6) als weitere Leckagedetektionskomponente verwendet wird, wobei das Messmittel (14) einen Widerstand eines durch den Draht (9) und die Innenleitung gebildeten Leiterabschnitts und/oder eine über dem Leiterabschnitt abfallende Spannung misst.

5. Zählereinrichtung (2) nach einem der vorangehenden Ansprüche, **dadurch gekennzeichnet, dass** die Steuereinrichtung (13) als Maßnahme zur Berücksichtigung der Detektion eines Lecks bei der Messgrößenaufnahme oder Messgrößenspeicherung ausgebildet ist.

6. Zählereinrichtung (2) nach Anspruch 5, **dadurch gekennzeichnet, dass** die Steuereinrichtung (13) zum Abspeichern von Zeiträumen, in denen ein Leck detektiert wurde, mit der aufgenommenen Messgröße und/oder zum Ermitteln eigener Messgrößen für Zeiträume, in denen ein Leck detektiert wurde, ausgebildet ist.

7. Zählereinrichtung (2) nach einem der vorangehenden Ansprüche, **dadurch gekennzeichnet, dass** die Zählereinrichtung (2) eine Kommunikationseinrichtung (16) zur drahtlosen und/oder drahtgebundenen Kommunikation mit wenigstens einem Kommunikationspartner aufweist und die Steuereinrichtung (13) als Maßnahme zur Ansteuerung der Kommunikationseinrichtung (16) zur Ausgabe eines ein Leck anzeigenden Kommunikationssignals ausgebildet ist.

8. Zählereinrichtung (2) nach Anspruch 7, **dadurch gekennzeichnet, dass** die Steuereinrichtung (13) zur Ausgabe eines ein Schließen eines in der Rohrleitung (3) angeordneten Ventils (5) auslösenden Steuersignals als Kommunikationssignal an das Ventil (5) und/oder zum Senden des Kommunikationssignals an wenigstens eine einem Endverbraucher und/oder einem Versorger und/oder einem Notfalldienst zugeordnete Empfangseinrichtung ausgebildet ist.

9. Zählersystem (1), umfassend eine Zählereinrichtung (2) nach einem der vorangehenden Ansprüche und die Rohrleitung (3) mit der wenigstens einen Leckagedetektionskomponente.

10. Verfahren zum Betrieb einer Zählereinrichtung (2) für eine eine durch ein Fluid transportierte Wärmenergie und/oder einen Fluiddurchfluss angebende Messgröße zum Anschluss an eine das Fluid führende Rohrleitung (3), wobei die Rohrleitung (3) wenigstens eine elektrisch leitende Leckagedetektionskomponente aufweist, wobei
- wenigstens ein elektrischer Kennwert der Leckagedetektionskomponente gemessen wird,
- durch Auswertung des gemessenen elektrischen Kennwerts ein Leck in der Rohrleitung (3) detektiert wird, und
- bei Detektion eines Lecks wenigstens eine die Messgrößenerfassung und/oder die Kommunikation des Lecks an einen Kommunikationspartner betreffende Maßnahme ausgelöst wird.
